# EUROPEAN PATENT APPLICATION

(11) **EP 1 219 351 A1**
(43) Date of publication of application: **03.07.2002**
(21) Application number: 01204814.6
(22) Date of filing: 10.12.2001
(51) Int. Cl.: B01J 27/16, B01D 53/94

(54) **Poison resistant NOx catalyst**

(30) Priority: 29.12.2000 US 754042
(71) Applicant: Delphi Technologies, Inc., Troy, MI 48007 (US)
(72) Inventor: Kupe, Joachim, Davisburg, MI 48350 (US); Fisher, Galen Bruce, Bloomfield Hills, MI 48301 (US); Hemingway, Mark David, Columbiaville, MI 48421 (US); Labarge, William J., Bay City, MI 48706 (US)
(74) Representative: Denton, Michael John

(57) **Abstract**

A poison resistant lean NOₓ catalyst comprising:
a catalyst support material including a metal-zirconium phosphate component.

## Description

### BACKGROUND OF THE INVENTION

The present invention relates to a catalyst for purifying exhaust gases from an internal combustion engine. In particular, it relates to a lean NO_{X} catalyst.

It is well known in the art to use catalyst compositions, including those commonly referred to as three-way conversion catalysts ("TWC catalysts") to treat the exhaust gases of internal combustion engines. Such catalysts, containing precious metals like platinum, palladium, and rhodium, have been found both to successfully promote the oxidation of unburned hydrocarbons (HC) and carbon monoxide (CO) and to promote the reduction of nitrogen oxides (NOₓ) in exhaust gas, provided that the engine is operated around balanced stoichiometry for combustion ("combustion stoichiometry"; i.e., between about 14.7 and 14.4 air/fuel (A/F) ratio).

However, fuel economy and global carbon dioxide (CO₂) emissions have made it desirable to operate engines under lean-burn conditions, where the air-to-fuel ratio is somewhat greater than combustion stoichiometry to realize a benefit in fuel economy. Diesel and lean-burn gasoline engines generally operate under highly oxidizing conditions (i.e., using much more air than is necessary to burn the fuel), typically at air/fuel ratios greater than 14.7 and generally between 19 and 35. Under these highly lean conditions, typical three-way catalysts exhibit little activity toward NOₓ reduction, as their reduction activity is suppressed by the presence of excess oxygen.

The control of NOₓ emissions from vehicles is a worldwide environmental problem. Lean-burn, high air-to-fuel ratio, and diesel engines are certain to become more important in meeting the mandated fuel economy requirements of next-generation vehicles. Development of an effective and durable catalyst for controlling NOₓ emissions under net oxidizing conditions accordingly is critical.

Recently, copper-ion exchanged zeolite catalysts have been shown to be active for selective reduction of NOₓ by hydrocarbons in the presence of excess oxygen. Platinum-ion exchanged zeolite catalyst is also known to be active for NO_{X} reduction by hydrocarbons under lean conditions. However, this catalytic activity is significant only in a narrow temperature range around the lightoff temperature of hydrocarbon oxidation. All the known lean-NOₓ cayalysts reported in the literature tend to lose their catalytic activity for NOₓ reduction when the catalyst temperature reaches well above the lightoff temperature of hydrocarbon oxidation. This narrow temperature window of the lean-NOₓ catalysts is considered to be one of the major technical obstacles, because it makes practical application of these catalysts difficult for lean-burn gasoline or diesel engines). As an example, the Cu-zeolite catalysts deactivate irreversibly if a certain temperature is exceeded. Catalyst deactivation is accelerated by the presence of water vapor in the stream and water vapor suppresses the NO reduction activity even at lower temperatures. Also, sulfate formation at active catalyst sites and on catalyst support materials causes deactivation. Practical lean-NOₓ catalysts must overcome all three problems simultaneously before they can be considered for commercial use. In the case of sulfur poisoning, some gasoline can contain up to 1200 ppm of organo-sulfur compounds. Lean-NOₓ catalysts promote the conversion of such compounds to SO₂ and SO₃ during combustion. Such SO₂ will adsorb onto the precious metal sites at temperatures below 300° C. and thereby inhibits the catalytic conversions of CO, CₓH_{y} (hydrocarbons) and NOₓ. At higher temperatures with an Al₂O₃ catalyst carrier, SO₂ is converted to SO₃ to form a large-volume, low-density material, Al₂(SO₄)₃, that alters the catalyst surface area and leads to deactivation. In the prior art, the primary solution to this problem has been to use fuels with low sulfur contents.

Another alternative is to use catalysts that selectively reduce NOₓ in the presence of a co-reductant, e.g., selective catalytic reduction (SCR) using ammonia or urea as a co-reductant. Selective catalytic reduction is based on the reaction of NO with hydrocarbon species activated on the catalyst surface and the subsequent reduction of NOₓ to N₂. More than fifty such SCR catalysts are conventionally known to exist. These include a wide assortment of catalysts, some containing base metals or precious metals that provide high activity. Unfortunately, just solving the problem of catalyst activity in an oxygen-rich environment is not enough for practical applications. Like most heterogeneous catalytic processes, the SCR process is susceptible to chemical and/or thermal deactivation. Many lean-NOₓ catalysts are too susceptible to high temperatures, water vapor and sulfur poisoning (from SOₓ).

Yet another viable alternative involves using co-existing hydrocarbons in the exhaust of mobile lean-burn gasoline engines as a co-reductant and is a more practical, cost-effective, and environmentally sound approach. The search for effective and durable non-selective catalytic reduction "NSCR" catalysts that work with hydrocarbon co-reductant in oxygen-rich environments is a high-priority issue in emissions control and the subject of intense investigations by automobile and catalyst companies, and universities, throughout the world.

A leading catalytic technology for removal of NOₓ from lean-burn engine exhausts involves NO_{X} storage reduction catalysis, commonly called the "lean-NOₓ trap". The lean-NOₓ trap technology can involve the catalytic oxidation of NO to NO₂ by catalytic metal components effective for such oxidation, such as precious metals. However, in the lean NOₓ trap, the formation of NO₂ is followed by the formation of a nitrate when the NO₂ is adsorbed onto the catalyst surface. The NO₂ is thus "trapped", i.e., stored, on the catalyst surface in the nitrate form and subsequently decomposed by periodically operating the system under stoiciometrically fuel-rich combustion conditions that effect a reduction of the released NOₓ (nitrate) to N₂.

The lean-NOₓ-trap technology has been limited to use for low sulfur fuels because catalysts that are active for converting NO to NO₂ are also active in converting SO₂ to SO₃. Lean NO_{X} trap catalysts have shown serious deactivation in the presence of SOₓ because, under oxygen-rich conditions, SOₓ adsorbs more strongly on NO₂ adsorption sites than NO₂, and the adsorbed SOₓ does not desorb altogether even under fuel-rich conditions. Such presence of SO₃ leads to the formation of sulfuric acid and sulfates that increase the particulates in the exhaust and poison the active sites on the catalyst. Attempts with limited success to solve such a problem have encompassed the use of selective SOₓ adsorbents upstream of lean NO_{X} trap adsorbents. Furthermore, catalytic oxidation of NO to NO₂ is limited in its temperature range. Oxidation of NO to NO₂ by a conventional Pt-based catalyst maximizes at about 250° C. and loses its efficiency below about 100 degrees and above about 400 degrees. Thus, the search continues in the development of systems that improve lean NO_{X} trap technology with respect to temperature and sulfer considerations.

Another NOₓ removal technique comprises a non-thermal plasma gas treatment of NO to produce NO₂ which is then combined with catalytic storage reduction treatment, e.g., a lean NOₓ trap, to enhance NO_{X} reduction in oxygen-rich vehicle engine exhausts. In the lean NO_{X} trap, the NO₂ from the plasma treatment is adsorbed on a nitrate-forming material, such as an alkali material, and stored as a nitrate. An engine controller periodically runs a brief fuel-rich condition to provide hydrocarbons for a reaction that decomposes the stored nitrate into benign products such as N₂. By using a plasma, the lean NOₓ trap catalyst can be implemented with known NO_{X} adsorbers, and the catalyst may contain less or essentially no precious metals, such as Pt, Pd and Rh, for reduction of the nitrate to N₂. Accordingly, an advantage is that a method for NO_{X} emission reduction is provided that is inexpensive and reliable. The plasma-assisted lean NO_{X} trap can allow the life of precious metal lean NO_{X} trap catalysts to be extended for relatively inexpensive compliance to NOₓ emission reduction laws. Furthermore, not only does the plasma-assisted lean NO_{X} trap process improve the activity, durability, and temperature window of lean NOₓ trap catalysts, but it allows the combustion of fuels containing relatively high sulfur contents with a concomitant reduction of NO_{X}, particularly in an oxygen-rich vehicular environment.

What is needed in the art is an exhaust gas catalyst system having improved durability, as well as effective NO_{X} management, over extended operating time. The present invention overcomes many of the shortcomings of the prior art.

### SUMMARY OF THE INVENTION

Now, according to the present invention, a lean NOₓ catalyst is provided for use in a non-thermal plasma assisted exhaust gas treatment system. The presently invented catalyst comprises a phosphate catalyst support that features large pores and accordingly is resistant to plugging and thereby limiting diffusion to subsurface catalysts. The support includes a metal-zirconium phosphate component to prevent sulfates from penetrating and poisoning the subsurface catalyst. The catalyst support preferably comprises a barium zirconium phosphate, a cesium zirconium phosphate, and/or a silver zirconium phosphate. Support activity may be modified with addition of titanium, aluminum, silicon and/or yttrium, such that barium titanium zirconium phosphate, barium aluminum zirconium phosphate, barium silicon zirconium phosphate or barium yttrium zirconium phosphate may be used. In addition, active metals, such as nickel, copper, and/or cobalt may be incorporated into the support, such that barium nickel zirconium phosphate, barium copper zirconium phosphate or barium cobalt zirconium phosphate may be used. The above-described and other features and advantages of the present invention will be appreciated and understood by those skilled in the art from the following detailed description and appended claims.

### DESCRIPTION OF PREFERRED EMBODIMENTS

The "occluding"(NOx absorbing) catalyst in diesel applications is typically barium-zeolite (active ~175-300°C). In lean burn applications, the occluding catalyst typically is barium-alumina (active ~300-475°C). However, a limitation of zeolites and alumina's is that their pore sizes are small (e.g., less than 6 nm(nanometers) and most often less than 2 nm). Also, the zeolites are very fine materials that pack tightly, thus making gas diffusion through a zeolite washcoat difficult.

Phosphate materials have high surface areas, similar to aluminas and zeolites. But, unlike aluminas and zeolites, phosphate materials have much larger pore sizes. The pore sizes of phosphates can be large enough that deposition of heavy organics do not greatly restrict gas diffusion to the subsurface catalyst areas. The phosphate supports have larger pore structures (e.g., up to 100 nm). Incorporating such coarse large pore materials as a catalyst support opens up the packing such that gas diffusion through the layer is much easier. Suitable large pore supports include barium zirconium phosphate, barium-titanium-zirconium phosphate and barium nickel-zirconium phosphate.

At the catalyst support surface (the portion of the support that exhaust gasses reach first), it has been determined that it is beneficial to avoid the use of dense-packed, smaller-pore alumina or silica-alumina (zeolite) support materials. According to the present invention, a surface of coarse (10 to 30 microns), larger-pore sized support material accommodates the scavenging of exhaust poisons without restricting diffusion to the catalyst subsurface. The preferred protective coating is barium zirconium phosphate. The surface chemistry of barium zirconium phosphate may be modified with titanium, aluminum, silicon or yttrium. An active metal such as nickel, cobalt or copper may also be included. The active subsurface catalyst may be an occluding material, such as barium, supported on additional metal phosphates.

Occluding ions can be ion exchanged onto the phosphate surface in the same manner as ion exchange onto a zeolite surface. For example, a typical zeolite formulation, as commercially obtained, typically has sodium on some of the silica alumina sites. When a zeolite material such as Na-SiO2/Al2O3 is reacted with barium nitrate, the barium ions replace the sodium ions. Upon calcining, the product becomes Ba-SiO2/Al2O3. In the same manner, using phosphates such as Na-Zr2P3O12, the sodium can be ion exchanged with barium nitrate attaching barium at the sodium sites to produce Ba-Zr4P6O24. Typical supported alkaline earths include BaZr4P6O24, Sr-Zr4P6O24, Cs-Zr4P6O24, and Ca-Zr4P6O24.

Pure barium zirconium phosphate, BaZr4P6O24, contains 12.8 wt% barium. However, similar to adsorption on zeolites, barium can be adsorbed not only on the sodium sites, but also on the zirconium sites, and even as free barium oxide in the pores. The zirconium phosphate support can contain over 30 wt% barium. The preferred loading of barium is about 13 wt% to about 24 wt%, and about 18 wt% is particularly preferred.

Further, the support material does not necessarily have to be pure barium zirconium phosphate. The zirconium phosphate may be modified with elements such as titanium, silicon, aluminum, or yttrium. Silicon substituted for phosphorus creates a deficient charge creating more anionic sites for barium. Yttrium substitution for zirconium creates a deficient charge creating more anionic sites for barium. A content of about 3 moles titanium, silicon, aluminum or yttrium to about 1 mole zirconium is preferred; about 2 moles titanium, silicon, aluminum or yttrium to about 2 moles zirconium is more preferred; and, about 1 mole titanium, silicon, aluminum or yttrium to about 3 moles zirconium is particularly preferred.

Additionally, a group VIII metal such as nickel, cobalt, or copper also may be incorporated in the support, forming, for example, barium nickel zirconium phosphate. A content of about 3 moles metal to about 1 mole zirconium is preferred; about 2 moles metal to about 2 moles zirconium is more preferred; and, about 1 mole metal to about 3 moles zirconium is particularly preferred.

In preparing the ion exchanged phosphate catalyst support material of the present invention, barium sources generally include barium nitrate, barium acetate, barium hydroxide, barium ethoxide, barium isopropoxide, barium 2-ethylhexanoate. Barium acetate, barium isopropoxide, and barium nitrate are preferred; barium isopropoxide and barium nitrate are more preferred; and barium nitrate is particularly preferred.

Suitable zirconium sources generally include zirconium dioxide, zirconium oxychloride, zirconium tert-butoxide, zirconium ethoxide, zirconium isopropoxide, colloidal zirconium oxide. Colloidal zirconium oxide, zirconium isopropoxide, and zirconium oxychloride are preferred; zirconium isopropoxide and zirconium oxychloride are more preferred; and zirconium oxychloride is particularly preferred.

Suitable phosphate sources generally include phosphoric acid, ammonium dihydrogen phosphate, diammonium hydrogen phosphate, triammonium phosphate, ammonium phosphate. Triammonium phosphate, diammonium hydrogen phosphate, and ammonium dihydrogen phosphate are preferred; diammonium hydrogen phosphate and ammonium dihydrogen phosphate are more preferred; and ammonium dihydrogen phosphate is particularly preferred.

Suitable titanium sources generally include titanium dioxide, titanium oxychloride, titanium oxynitrate, titanium isobutoxide, titanium n-butoxide, titanium tert-butoxide, titanium ethoxide, titanium isopropoxide, titanium methoxide, titanium n-propoxide, colloidal titanium oxide. Titanium oxynitrate, titanium isopropoxide, and titanium oxychloride are preferred; titanium isopropoxide and titanium oxychloride are more preferred; and titanium oxychloride is particularly preferred.

Suitable aluminum sources generally include aluminum oxide, aluminum hydroxide, aluminum methoxide, aluminum n-butoxide, aluminum ethoxide and aluminum isopropoxide. Aluminum ethoxide, aluminum isopropoxide, and aluminum hydroxide are preferred; aluminum isopropoxide and aluminum hydroxide are more preferred; and aluminum hydroxide is particularly preferred.

Suitable silicon sources generally include silicon oxide, colloidal silicon oxide, aminopropylsilanetriol, N-propyltrimethoxysilane, chloropropyltrimethoxysilane, isobutyltriethoxysilane, tetraethoxysilane, ureidopropyltriethoxysilane, and vinyltrimethoxysilane. Aminopropylsilanetriol, ,N-propyltrimethoxysilane, and isobutyltriethoxysilane are preferred; N-propyltrimethoxysilane and isobutyltriethoxysilane are more preferred; and isobutyltriethoxysilane is particularly preferred.

Suitable yttrium sources generally include yttrium oxide, colloidal yttrium oxide, yttrium isopropoxide, yttrium 2-ethylhexanoate. Yttrium 2-ethylhexanote, colloidal yttrium oxide, and yttrium isopropoxide are preferred; colloidal yttrium oxide and yttrium isopropoxide are more preferred; and yttrium isopropoxide is particularly preferred.

Suitable nickel sources generally include nickel oxide, nickel nitrate, nickel acetate, nickel hydroxide, nickel carbonate, nickel stearate and nickel phosphate. Nickel nitrate, nickel hydroxide, and nickel acetate are preferred; nickel hydroxide and nickel acetate are more preferred; and nickel acetate is particularly preferred.

Suitable cobalt sources generally include cobalt oxide, cobalt nitrate, cobalt hydroxide, cobalt acetate, cobalt carbonate, cobalt stearate, cobalt ammonium phosphate and cobalt phosphate. Cobalt nitrate, cobalt hydroxide, and cobalt acetate are preferred; cobalt hydroxide and cobalt acetate are more preferred; and, cobalt acetate is particularly preferred.

Suitable copper sources generally include copper oxide, copper nitrate, copper acetate, copper carbonate, copper hydroxide, copper oxylate and copper phosphate. Copper nitrate, copper hydroxide, and copper acetate are preferred; copper hydroxide and copper acetate are more preferred; and, copper acetate is particularly preferred.

The following examples are provided to further describe the invention. The examples are intended to be illustrative in nature and are not to be construed as limiting the scope of the invention.

### Example 1

1 mole barium nitrate, 4 moles zirconium oxychloride and 6 moles ammonium dihydrogen phosphate are mixed together. The mixture is allowed to set 24 hours. The mixture is filtered, washed, dried at 80°C then calcined to 500°C. The resulting product is ball milled and screened to 10 to 30 microns.

1000 grams barium zirconium phosphate, 30 grams ammonium dihydrogen phosphate and 1300 grams water are mixed into a slurry. The slurry is coated on a 600 cell/in³ cordierite monolith and calcined to 500 °C for 4 hours. The calcined washcoat weight is targeted to 4.0 g/in³.

### Example 2

0.75 mole barium nitrate, 0.25 mole nickel nitrate, 4 moles zirconium oxychloride and 6 moles ammonium dihydrogen phosphate are mixed together. The mixture is allowed to set 24 hours. The mixture is filtered, washed, dried at 80°C then calcined to 500°C. The resulting product is ball milled and screened to less than 10 microns.

1000 grams barium nickel zirconium phosphate, 30 grams ammonium dihydrogen phosphate and 1300 grams water are mixed into a slurry. The slurry is coated on a 600 cell/in³ cordierite monolith and calcined to 500°C for 4 hours. The calcined washcoat weight is targeted to 4.0 g/in³.

### Example 3

1 mole barium nitrate, 3 moles zirconium oxychloride, 1 mole titanium oxychloride and 6 moles ammonium dihydrogen phosphate are mixed together. The mixture is allowed to set 24 hours. The mixture is filtered, washed, dried at 80°C then calcined to 500°C. The resulting product is ball milled and screened to less than 10 microns.

1000 grams barium titanium zirconium phosphate, 30 grams ammonium dihydrogen phosphate and 1300 grams water are mixed into a slurry. The slurry is coated on a 600 cell/in³ cordierite monolith and calcined to 500°C for 4 hours. The calcined washcoat weight is targeted to 4.0 g/in³.

The coatings made and tested are barium zirconium phosphate, barium nickel zirconium phosphate, and barium titanium zirconium phosphate. All catalysts had conversions of at least 70% NOₓ to N₂.

While preferred embodiments have been shown and described, various modifications and substitutions may be made thereto without departing from the spirit and scope of the invention. Accordingly, it is to be understood that the present invention has been described by way of illustration only, and such illustrations and embodiments as have been disclosed herein are not to be construed as limiting to the claims.

## Claims

1. A poison resistant lean NO_{X} catalyst comprising:
a catalyst support material including a metal-zirconium phosphate component.

2. The NOₓ catalyst of Claim 1 comprising a metal-zirconium phosphate support reducted from the group consisting of barium zirconium phosphate, cesium zirconium phosphate, silver zirconium phosphate, and mixtures thereof.

3. The NO_{X} catalyst of Claim 2 wherein the metal-zirconium phosphate is barium zirconium phosphate.

4. The NO_{X} catalyst of Claim 2 comprising a metal-zirconium phosphate support including an additive component selected from the group consisting of titanium, aluminum, silver, yttrium, and mixtures thereof.

5. The NOₓ catalyst of Claim 2 comprising a metal-zirconium phosphate support including an active metal component selected from the group consisting of nickel, copper, cobalt, and mixtures thereof.

6. The NO_{X} catalyst of Claim 2 comprising a metal-zirconium phosphate support including an additive component selected from the group consisting of titanium, aluminum, silver, yytrium, and mixtures thereof, and including an active metal component selected from the group consisting of nickel, copper, cobalt, and mixtures thereof.

7. The NOₓ catalyst of Claim 1 wherein the metal-zirconium phosphate component has pore sizes ranging from about 10 to about 30 microns.

8. The NOₓ catalyst of Claim 2 wherein the barium zirconium phosphate includes about 13 to 24 weight percent barium.

9. The NO_{X} catalyst of Claim 4 wherein the metal-zirconium phosphate includes about 1 to 3 moles of additive component to about 1 to 3 moles of zirconium.

10. The NO_{X} catalyst of Claim 5 wherein the metal-zirconium phosphate support includes about 1 to 3 moles of active metal component to about 1 to 3 moles of zirconium.
